# EUROPÄISCHE PATENTANMELDUNG

(11) **EP 2 174 544 A1**
(43) Veröffentlichungstag der Anmeldung: **14.04.2010**
(21) Anmeldenummer: 08017684.5
(22) Anmeldetag: 09.10.2008
(51) Int. Cl.: A01L 11/00, B23G 9/00

(54) **Befestigungsmethode von Hufeisenstollen und Werkzeug-Set zur Befestigung der Hufeisenstollen**

(71) Anmelder: ARPAV Import-Export Artur Pawlowski, 80-354 Gdansk (PL)
(72) Erfinder: ARPAV Import-Export Artur Pawlowski, 80-354 Gdansk (PL)
(74) Vertreter: Proscinski, Jan

(57) **Zusammenfassung**

Die Methode besteht darin, dass bei der mechanischen Befestigung der Stollen in den Hufeisen im ersten Schritt die Säuberung des Lichts der Öffnungen für die Stollen durchgeführt wird, und im nächsten Schritt die Schraubengänge gereinigt und nachprofiliert werden, wonach in so vorbereitete Gewindelöcher die Stollen mechanisch eingeschraubt werden.

Das Werkzeug-Set gemäß der Erfindung ist **dadurch gekennzeichnet, dass** die Säuberung der Öffnungen für die Stollen mit einem Werkzeug (1) in Form eines walzenförmigen Bolzens erfolgt, dessen Arbeitsende (2) eine waagerechte obere Schneidenkante (3) besitzt, welche durch Überschneidung von zwei winkeligen Schnittflächen (4) gebildet wird, die im Bearbeitungsprozess mit Hilfs-Schneidkanten und mit länglichen bogenförmigen Abfuhrnuten (5) zusammenwirken, welche wendelförmig zum unteren Teil des Werkzeugs hin verlaufen, dessen Arbeitsbereich von dem weiteren Bereich durch einen Distanzflansch (6) abgetrennt ist. Die Säuberung und Nachprofilierung der Schraubengänge für die in die Gewindelöcher einzuschraubenden Stollen erfolgt mit einem Werkzeug (8) in Form eines walzenförmigen Bolzens, dessen Arbeitsende (9) eine konische Stirnfläche (10) besitzt, die in eine mit Gewinde versehene Zylinderfläche mit Schraubengängen, welche zugleich als Schneid- und Reinigungszähne (11) des Werkzeugs dienen, übergeht, dessen Arbeitsbereich von dem weiteren Bereich durch einen Distanzflansch (12) abgetrennt ist. Auf dem mit Gewinde versehenen Abschnitt der Arbeitsfläche sind längliche Abfuhrnuten (13) mit elliptischem Querschnitt geformt, in denen sich an der Mündung jeder Nut (13) auf einer der Seiten eine winkelige Abschrägung (14) befindet, die mit der Schneidenbrust einen spitzen Bearbeitungswinkel des Werkzeugs bildet.

## Beschreibung

Gegenstand der Erfindung ist eine Befestigungsmethode der Stollen in den Hufeisen sowie ein Werkzeug-Set zur Befestigung der Stollen in den Hufeisen mit der Methode gemäß der Erfindung.

Im aktuellen Stand der Technik wird die Reinigung der Öffnungen für die Stollen sowie deren Ein- und Ausschrauben üblicherweise unter Verwendung eines Gewindebohrers und eines Handschlüssels durchgeführt. Diese Tätigkeiten werden an den an die Hufen angenagelten Hufeisen realisiert. Dadurch entsteht eine Verletzungsgefahr für das Pferd und die Hände des Reiters, denn es kommt häufig vor, dass das Pferd mit dem in die Öffnung eingeschraubtem Gewindebohrer scheu wird. Ein weiterer Nachteil der bekannten Lösungen ist die lange Dauer der manuellen Reinigung, des Ein- und Ausschraubens der Stollen, was zur Folge hat, dass die Person, die diese Handlungen ausführt, über lange Zeit in einer sehr unbequemen Körperhaltung bleiben muss, die Schmerzen im Kreuz, in den Beinen und Armen verursacht.

Die technische Aufgabe und das Ziel der Erfindung ist die Erarbeitung einer Methode und eines Werkzeug-Sets zur Befestigung der Hufeisenstollen, die die obigen Nachteile beseitigen.

Diese Aufgabe und Ziel wurden im Ergebnis lang andauernder Versuche und technologischer Prüfungen sowie im Verlauf praktischer Befestigungen erreicht. Als Folge davon wurden eine Methode und ein Werkzeug-Set zur Anwendung der Methode gemäß der Erfindung erarbeitet.

In der Methode gemäß der Erfindung wird bei der mechanischen Befestigung der Stollen in den Hufeisen im ersten Schritt die Säuberung des Lichts der Öffnung für die Stollen durchgeführt. Im nächsten Schritt werden die Schraubengänge gereinigt und nachprofiliert. In so vorbereitete Gewindelöcher werden dann die Stollen mechanisch eingeschraubt.

Die Methode gemäß der Erfindung wird mit einem Werkzeug-Set realisiert, das aus einem Werkzeug zur Reinigung der Öffnungen und einem Werkzeug zur Säuberung und Nachprofilierung der Schraubengänge besteht. Das Einschrauben der Stollen in die Gewindelöcher erfolgt mit demselben Triebwerk, das in den vorhergehenden Arbeitsgängen verwendet wird. Es wird nur zusätzlich mit einem Aufsatzfutter für den Stollenkopf ausgerüstet. Die Säuberung der Öffnungen für die Stollen erfolgt mit einem Werkzeug in Form eines walzenförmigen Bolzens, dessen Arbeitsende eine waagerechte obere Schneidenkante besitzt, welche durch Überschneidung von zwei winkeligen Schnittflächen gebildet wird, die im Bearbeitungsprozess mit Hilfs-Schneidkanten und mit bogenförmigen Abfuhrnuten zusammenwirken, welche wendelförmig zu den unteren Teilen des Werkzeugs hin verlaufen, dessen Arbeitsbereich von dem weiteren Bereich durch einen Distanzflansch abgetrennt ist.

Die Säuberung und Nachprofilierung der Schraubengänge für die einzuschraubenden Stollen erfolgt mit einem Werkzeug in Form eines walzenförmigen Bolzens, dessen Arbeitsende eine konische Stirnfläche besitzt, die in eine mit Gewinde versehene Zylinderfläche mit Schraubengängen, welche zugleich als Schneid- und Reinigungszähne dienen, übergeht, was den Arbeitsbereich des Werkzeugs bildet, der von dem weiteren Bereich durch einen Distanzflansch abgetrennt ist. Auf dem mit Gewinde versehenen Abschnitt der Arbeitsfläche sind längliche Abfuhrnuten mit elliptischem Querschnitt geformt, in denen sich an der Mündung jeder Nut auf einer der Seiten eine winkelige Abschrägung befindet, die mit der Schneidenbrust einen spitzen Bearbeitungswinkel des Werkzeugs bildet.

Die Methode und das Werkzeug-Set zur Befestigung der Hufeisenstollen gemäß der Erfindung gewährleisten die völlige Sicherheit des Pferdes und des Reiters während der Befestigung der Stollen in den Hufeisen. Ein sehr wichtiger Vorteil ist die Mühelosigkeit und die sehr kurze Durchführungszeit der Arbeitsgänge. Ein wesentlicher ergonomischer Vorteil ist das unifizierte Set von Werkzeugen zur Befestigung der Hufeisenstollen, untergebracht in einer handlichen Verpackung, welches leicht zu transportieren und aufzubewahren ist, wodurch es Voraussetzungen für die Durchführung dieser Tätigkeiten sowohl in geschlossenen Räumen als auch im Freien schafft. Die Werkzeuge charakterisieren sich durch einen einfachen, leichten, kompakten Bau, einfache Montage und Demontage der Arbeitswerkzeuge während des Arbeitsvorgangs sowie durch einfache Bedienung des Triebwerks, welches nach zusätzlicher kleiner Ergänzung des Futters auch zum Ein- und Ausschrauben der Stollen eingesetzt werden kann.

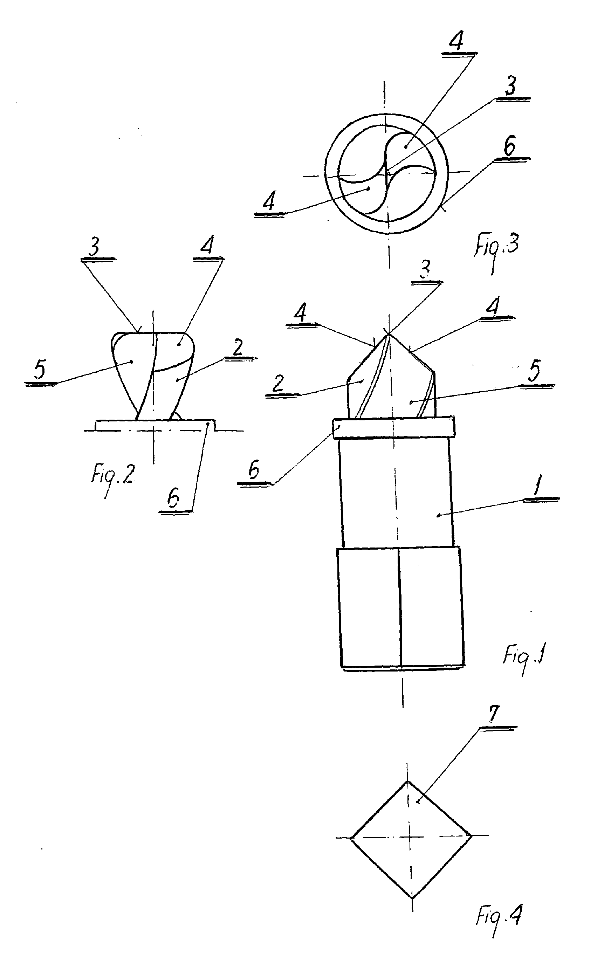

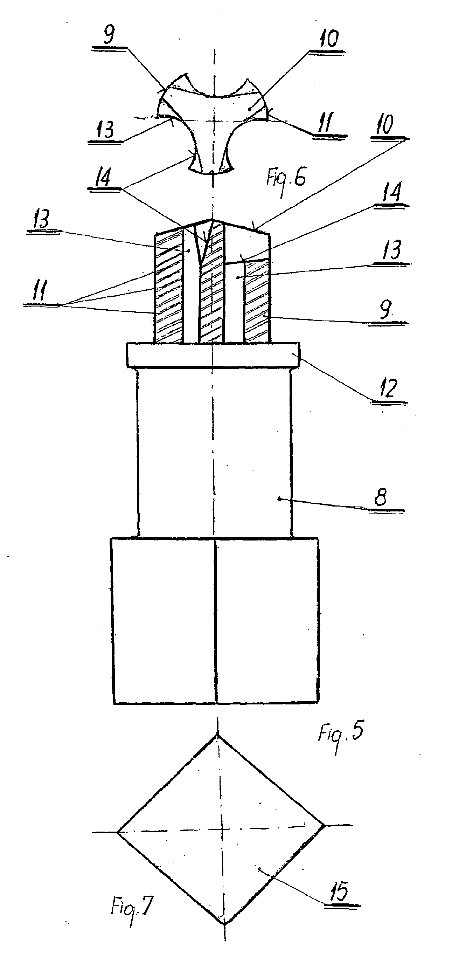

Der Gegenstand der Erfindung wurde anhand eines Ausführungsbeispiels in einer Zeichnung veranschaulicht, wo die Figur 1 die Seitenansicht des Werkzeugs zur Säuberung der Öffnungen für die Stollen, Figur 2 - die Seitenansicht des Arbeitsendes, Figur 3 - die Draufsicht des Werkzeugs wie in Figur 1 Figur 4 - die Untersicht des Werkzeugs wie in Figur 1, Figur 5 - die Seitenansicht des Werkzeugs zur Reinigung und Nachprofilierung der Schraubengänge für die einzuschraubenden Stollen, Figur 6 - die Draufsicht des Arbeitsendes des Werkzeugs wie in Figur 5, und Figur 7 - die Untersicht des Werkzeugs wie in Figur 5 darstellt.

Zur Befestigung der Hufeisenstollen mit der Methode gemäß der Erfindung wird ein Set von Werkzeugen eingesetzt, die im ersten Schritt zur Säuberung des Lichts der Öffnungen für die Stollen, und im zweiten Schritt zur Reinigung und Nachprofilierung der Schraubengänge in den Öffnungen für die Stollen dienen.

Die Säuberung der Öffnungen erfolgt mit einem Werkzeug 1 in Form eines walzenförmigen Bolzens, dessen Arbeitsende 2 eine waagerechte obere Schneidenkante 3 besitzt, welche durch Überschneidung von zwei winkeligen Schnittflächen 4 gebildet wird, die im Bearbeitungsprozess mit Hilfs-Schneidkanten und mit bogenförmigen Abfuhrnuten 5 zusammenwirken, welche wendelförmig zum unteren Teil des Werkzeugs hin verlaufen, wo der Arbeitsbereich des Arbeitsendes 2 von dem weiteren Bereich, darunter auch von dem Einspannende 7 mit quadratischem Querschnitt, durch einen Distanzflansch 6 abgetrennt ist.

Die Säuberung und Nachprofilierung der Schraubengänge für die in die Gewindelöcher einzuschraubenden Stollen erfolgt mit einem Werkzeug 8 in Form eines walzenförmigen Bolzens, dessen Arbeitsende 9 eine konische Stirnfläche 10 besitzt, die in eine mit Gewinde versehene Zylinderfläche mit Schraubengängen, welche zugleich als Schneid- und Reinigungszähne 11 des Werkzeugs dienen, übergeht, dessen Arbeitsende 9 von dem weiteren Teil des Werkzeugs durch einen Distanzflansch 12 abgetrennt ist. Auf dem mit Gewinde versehenen Abschnitt der Zylinderfläche mit Schneid- und Reinigungszähnen 11 sind längliche Abfuhrnuten 13 mit elliptischem Querschnitt geformt, in denen sich an der Mündung auf einer der Seiten eine winkelige Abschrägung 14 befindet, die mit der Schneidenbrust einen spitzen Bearbeitungswinkel des Werkzeugs bildet. Auf der gegenüberliegenden Seite des Arbeitsendes 9 hat das Werkzeug 8 ein Einspannende 15, das zum Einsetzen des Werkzeuges im Triebwerk dient.

Die Methode gemäß der Erfindung wurde anhand eines Beispiels der Befestigung der Hufeisenstollen näher dargestellt.

Wenn sich das Pferd zwischen den Trainings, Sportwettbewerben oder Arbeitseinsätzen erholt, hat es in den Hufeisen keine Stollen, die es während des Wettbewerbs, der Arbeit und des Trainings bei verschiedenen Boden- und Wetterverhältnissen vor dem Ausrutschen schützen sollen. Dies ist durch die Gesundheit des Pferdes begründet, denn die Stollen können den Aufstellungswinkel des Hufes zum Boden verändern, was in der Konsequenz die Beinhaltung verändern und zu Verletzungen der Beine führen kann. Dies ist um so wichtiger, als die Ausruhezeit des Pferdes den größten Teil des Tages einnimmt. Nach dem Ausruhen sind die Öffnungen für die Stollen verschmutzt. Vor dem Einschrauben der Stollen müssen die Öffnungen und ihre Gewinde gereinigt werden. Die bisher praktizierte manuelle Reinigung der Öffnungen und der Gewinde sowie das Einschrauben der Stollen mit den oben beschriebenen Nachteilen wurden in der Methode gemäß der Erfindung durch mechanische Operationen ersetzt. Das Triebwerk ist ein Schrauber, an dessen Ende ein Schlüssel mit quadratischem Sitz für die darin einzusetzenden Arbeitswerkzeuge mit quadratischem Abschluss eingespannt ist.

Reinigung der Öffnungen für die Stollen:
1. Schlüssel mit quadratischem Sitz im Schrauber einsetzen.
2. Werkzeug 1 zur Reinigung der Öffnungen in den Schlüssel einsetzen.
3. Mit dem Schrauber bei eingestelltem Rechtslauf das Werkzeug 1 mehrmals rechtwinklig zur Öffnung ein- und zurückfahren, bis die Öffnung für den Stollen gereinigt ist.
4. Werkzeug 1 zur Reinigung der Öffnungen gegen das Werkzeug 8 zur Reinigung und Nachprofilierung der Schraubengänge austauschen.
5. Langsam und mit Gefühl das Werkzeug 8 in die Öffnung für den Stollen senkrecht zur Öffnung einfahren, bis der Distanzflansch 12 an den Huf anschlägt.
6. Am Schrauber Linkslauf einstellen und das Werkzeug 8 mit Gefühl herausfahren.

Das mechanische Ein- und Ausschrauben der Stollen wird wie folgt durchgeführt:
1. Je nach Typ des Stollens den geeigneten Schlüssel mit quadratischem oder sechseckigem Schlüsseleinsatz im Schrauber einspannen.
2. Stollen in den Schlüssel setzen.
3. Stollen mit dem Schrauber bei eingestelltem Rechtslauf in die Öffnung eindrehen.
4. Stollen mit dem Schrauber bei eingestelltem Linkslauf herausdrehen.

Bei der Anwendung der Methode gemäß der Erfindung muss beachtet werden, dass das Werkzeug 8 nicht unter Kraftanwendung ein- und ausgeschraubt werden darf; bei zu hoher Drehzahl und einem falschen Winkel kann das Gewinde in der Stollenöffnung zerstört werden.

## Patentansprüche

1. Methode zur Befestigung der Stollen in den an die Hufen angenagelten Hufeisen, **dadurch gekennzeichnet, dass** bei der mechanischen Befestigung der Stollen in den Hufeisen im ersten Schritt die Säuberung des Lichts der Öffnungen für die Stollen durchgeführt wird, und im nächsten Schritt die Schraubengänge gereinigt und nachprofiliert werden, wonach in so vorbereitete Gewindelöcher die Stollen mechanisch eingeschraubt werden.

2. Werkzeug-Set zur Befestigung der Hufeisenstollen mit der Methode nach Anspruch 1, **dadurch gekennzeichnet, dass** die Säuberung der Öffnungen für die Stollen mit einem Werkzeug (1) in Form eines walzenförmigen Bolzens erfolgt, dessen Arbeitsende (2) eine waagerechte obere Schneidenkante (3) besitzt, welche durch Überschneidung von zwei winkeligen Schnittflächen (4) gebildet wird, die im Bearbeitungsprozess mit Hilfs-Schneidkanten und mit länglichen bogenförmigen Abfuhrnuten (5) zusammenwirken, welche wendelförmig zum unteren Teil des Werkzeugs hin verlaufen, dessen Arbeitsbereich von dem weiteren Bereich durch einen Distanzflansch (6) abgetrennt ist, und dass die Säuberung und Nachprofilierung der Schraubengänge für die in die Gewindelöcher einzuschraubenden Stollen mit einem Werkzeug (8) in Form eines walzenförmigen Bolzens erfolgt, dessen Arbeitsende (9) eine konische Stirnfläche (10) besitzt, die in eine mit Gewinde versehene Zylinderfläche mit Schraubehgängen, welche zugleich als Schneid- und Reinigungszähne (11) des Werkzeugs dienen, übergeht, dessen Arbeitsbereich von dem weiteren Bereich durch einen Distanzflansch (12) abgetrennt ist, wobei auf dem mit Gewinde versehenen Abschnitt der Arbeitsfläche längliche Abfuhrnuten (13) mit elliptischem Querschnitt geformt sind, in denen sich an der Mündung jeder Nut (13) auf einer der Seiten eine winkelige Abschrägung (14) befindet, die mit der Schneidenbrust einen spitzen Bearbeitungswinkel des Werkzeugs bildet.
